# EUROPEAN PATENT APPLICATION

(11) **EP 1 875 827 A1**
(43) Date of publication of application: **09.01.2008**
(21) Application number: 06728738.3
(22) Date of filing: 01.03.2006
(51) Int. Cl.: A44C 25/00, A44C 27/00, C23C 18/31, A44C 9/00

(54) **PRECIOUS METAL JEWELRY AND PROCESS FOR PRODUCING THE SAME**

(71) Applicant: Nakakura, Sekikazu, Tokyo, 111-0056 (JP); Nakajima, Kazuki, Minami-apls-shi, Yamanashi 400-0204 (JP)
(72) Inventor: NAKAJIMA, Kazuki, Minami-apls-shi, Yamanashi 400-0204 (JP)
(74) Representative: Faulkner, Thomas John
(86) International application number: PCT/JP2006/304419
(87) International publication number: WO 2007/105259

(57) **Abstract**

This Invention concerns a ring (11) or other accessory and jewelry goods provided with a pattern resulting from processing a metal underlayer (111) of a noble metal and/or a metal plating layer (112) formed on the metal underlayer (111). The noble metal jewelry goods has the metal plating layer (112) formed in a uniform thickness on the whole upper surface of the metal underlayer (111) and has the metal underlayer (111) and/or the metal plating layer (112) enabled by the rod-shaped grinding tool (12) to form glossy regions (111-1) and (111-2) exposing the metal underlayer (111). The noble metal jewelry goods of this invention is enabled to form the metal plating layer region (112) that has not been ground by the rod-shaped grinding tool (12) at all and expose the metal plating layer. The method for the production of the noble metal jewelry goods causes the metal underlayer (111) and/or the metal plating layer (112) of the noble metal jewelry goods to be linearly ground as controlled in fine variation in length, depth and pitch in the direction of the line width and consequently allows formation of different light reflection regions (113) showing no clear periphery of the pattern as compared with the pattern manufactured by using a mask. Thus, the produced noble metal jewelry goods deserves a high price.

## Description

### Technical Field:

This invention relates to finger rings or other accessories and jewelry goods having a pattern imparted thereto by processing a metal underlayer of noble metal and/or a metal plating layer on the metal underlayer. This invention also relates to a method for the production of a noble metal jewelry goods that, while processing a pattern in a metal underlayer of noble metal and/or a metal plating layer on the metal underlayer, processes a region having light reflection varied by changing a linear depth, a length and a pitch in the direction of the line width.

### Background Art:

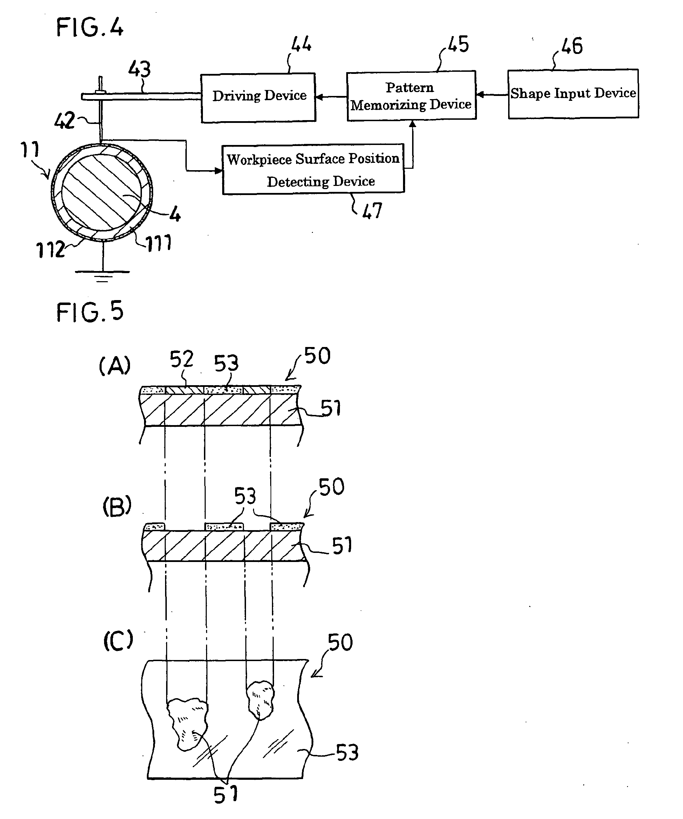

FIGs**.** 5(A) to 5(C) are explanatory views showing the method conventionally carried out for imparting a pattern to a noble metal jewelry goods. In FIG. 5(A), a finger ring 50, for example, has a metal underlayer 51 formed of gold or a gold alloy. On the upper surface of the metal underlayer 51, a mask 52 fated to constitute a required pattern is formed. The metal underlayer 51 has its part covered with the mask 52 and the part thereof destitute of the mask 52 is metallically plated to form a metal plating layer 53. The metal underlayer 51 shown in FIG. 5(A) and formed of gold or a gold alloy is deprived of the mask 52 as illustrated in FIG. 5(B) to leave behind the metal plating layer 53 with a required pattern on the metal underlayer 51. When the finger ring 50 is observed from above as shown in FIG. 5(C), the metal underlayer 51 identical in shape with the mask 52 appears in a golden color with the metal plating layer 53 as the background.

The present applicant for patent has proposed in JP-A 2002-282024 a noble metal accessory having formed a pattern of chevron stripes on the outer periphery thereof by the use of a mask.

The conventional method for the production of a noble metal jewelry goods never fails to use a mask of a prescribed shape in obtaining a metal plating layer of a required pattern. The method for the production of the noble metal jewelry goods, as disclosed in Patent Document 1, has a hard carbon film formed as a mask on the metal underlayer. Since the plating with a noble metal, such as ruthenium, generates a high temperature, it is not inconceivable that the mask will get out of shape or peel off and the required pattern will not be obtained. The mask capable of withstanding the high temperature is expensive and further entails the problem that the mask will leave behind an excessively clear trace when the periphery of the pattern is required to be blurred. If the noble metal jewelry goods shows an unduly clear trace of the pattern, it will at times appear to be a cheap article and entail the problem that it does not look nice to advantage for the expensiveness of noble metal. Since the manufacture and the removal of the mask are performed by chemical treatments, they more often than not lead to occurrence of environmental pollution.

For the purpose of solving the problems, this invention is aimed at providing a noble metal jewelry goods that is provided with light reflection regions differing between the part of a metal plating layer and the part of a metal underlayer by applying the metal plating layer to the whole surface on the metal underlayer and polishing the metal plating layer till the lines of depths, lengths and pitches in the direction of the line width finely varied are formed thereon. This invention is also aimed at providing a method for the production of a noble metal jewelry goods that is capable of manufacturing different light reflection regions or blurred regions by detecting a metal plating layer on a metal underlayer and grinding the metal plating layer in the periphery of a pattern memorized in advance till depths, lengths and pitches in the direction of the line width varied as required are obtained.

### Disclosure of the Invention:

The noble metal jewelry goods of this invention has a pattern formed of a noble metal constituting a metal underlayer and a metal plating layer formed on the metal underlayer, wherein the pattern comprises a metal plating layer region that exposes the metal plating layer, a glossy region that exposes a glossy surface of the metal underlayer in consequence of removal of the metal plating layer by grinding and different light reflection regions that generate different light reflections in consequence of variation in depth and length of the metal plating layer and the metal underlayer through fine and linear grinding.

In the noble metal jewelry goods of this invention, the metal underlayer is made of at least one member selected from the group consisting of gold, platinum, silver, copper and alloys thereof and the metal plating layer is made of at least one member selected from the group consisting of ruthenium, rhodium, palladium, platinum, silver, copper and alloys thereof.

In the noble metal jewelry goods of this invention, the different light reflection regions have fine lines of the metal plating layer and the metal underlayer appearing alternately or with prescribed intervals.

In the noble metal jewelry goods of this invention, the pattern has a curved surface on which the metal plating layer region, the glossy region and the different light reflection regions are formed.

In the noble metal jewelry goods of this invention, the metal plating region of the pattern encloses the glossy region, and the different light reflection regions consist of fine lines encircling a periphery of the metal plating region.

The noble metal jewelry goods of this invention further comprises a base of ceramic, glass or synthetic resin, on which the metal underlayer and the metal plating layer are formed.

The method of this invention for the production of a noble metal jewelry goods having a pattern formed of a noble metal constituting a metal underlayer and a metal plating layer formed on the metal underlayer, comprises the steps of forming the metal plating layer on the metal underlayer, grinding the metal plating layer till a glossy surface of the metal underlayer is exposed, grinding in a finely linear form the metal plating layer and the metal underlayer using a rod-shaped grinding tool having a grinding material formed at a leading end thereof and producing a prescribed alternating motion to give the metal underlayer and the metal plating layer different grinding depths, whereby the pattern comprises a metal plating layer region, a glossy region and different light reflection regions.

In the method of this invention for the production of the noble metal jewelry goods, the different light reflecting regions are formed with finely linear lengths, depths, and pitches based on information memorized in advance, using a driving device capable of being driven in x-axis, y-axis and z-axis directions, a controlling device for the driving device and a detecting sensor capable of detecting a surface to be processed.

Further, in the method of this invention for the production of the noble metal jewelry goods, the rod-shaped grinding tool has pitches of motion thereof varied during the manufacture of the different light reflection regions.

In the method of this invention for the production of the noble metal jewelry goods, the noble metal jewelry goods has a base of ceramic, glass or synthetic resin, on which the metal underlayer and the metal plating layer are formed by the electrolessly plating method, chemical or physical vapor phase growth method or sputtering method.

According to this invention, regions varied in light reflection are formed as a pattern by finely processing the metal underlayer of a noble metal jewelry goods and the metal plating layer formed thereon, thereby imparting thereto linear grindings varied in depth, length and pitch in the direction of the line width. Since the linear grindings varied in depth, length and pitch give rise to such regions as have mingled therein the color of the metal underlayer, the color of the metal plating layer, the colors of reflections varied by the difference in depth and/or length of the light reflection, the pattern looks more beautiful than the pattern formed by the use of a mask and adds further to the special property of noble metal.

According to this invention, numerous patterns can be easily manufactured by varying the region exposing the metal underlayer, the region provided with the metal plating layer and the regions emitting different light reflections. Particularly, the linear polishes varied in depth, length and pitch make it possible to depict a complicated design and display even the pattern of an animal's coat of hairs.

Further, according to this invention, since the position of the contact of the leading terminal part of the grinding tool on the metal plating layer are instantly detected, the grinding is started to produce linear grindings controlled in the depth, length and pitch in the direction of the line width based on the data memorized in advance based on the time and the position mentioned above. Thus, a pattern containing light reflection regions varied as required can be accurately manufactured not only on a plane surface but also on a curved surface.

According to this invention, owing to the absence of a chemical treatment directed to forming and removing a mask, the jewelry goods of complicated shapes abounding in variations in pattern in the thickness direction can be mass-produced safely without entailing environmental pollution.

Further, according to this invention, since the metal underlayer and the metal plating layer are made to adhere with great fastness and the metal plating layer does not easily peel off the metal underlayer, the produced jewelry goods can be easily repaired and reformed by the use of a grinding tool.

### Brief Description of the Drawings:

FIG. 1(A) is a cross section for explaining an example of forming a pattern on a finger ring in one embodiment of this invention.
FIG. 1(B) is a perspective view for explaining an example of forming a finger ring in the embodiment of this invention.
FIG. 2 is an enlarged schematic view for explaining the state of manufacturing a pattern of this invention.
FIG. 3(A) is a schematic view for illustrating the formation of a metal plating layer throughout in a uniform thickness on the upper surface of a metal underlayer in the embodiment of this invention.
FIG. 3(B) is an enlarged view illustrating the parts forming glossy regions and the parts forming different reflection regions in the embodiment of this invention.
FIG. 3(C) is a cross section taken through FIG. 3(B) along line III-III'.
FIG. 4 is an explanatory view illustrating one example of the method of this invention for manufacturing a noble metal jewelry goods.
FIG. 5(A) is a diagram illustrating a metal underlayer formed of gold or a gold alloy used in the conventional method for imparting a pattern to a noble metal jewelry goods.
FIG. 5(B) is a side view illustrating the state resulting from removal of a mask in the conventional method for imparting a pattern to a noble metal jewelry goods.
FIG. 5(C) is a top view of the state shown in FIG. 5(B).

### Best Mode for carrying out the Invention:

The noble metal jewelry goods of this invention consists of a noble metal constituting a metal underlayer and a metal plating layer formed on the metal underlayer and assumes a pattern formed of a metal plating layer region, a glossy region of metal underlayer and different light reflection regions resulting from mixing the metal plating layer region and the metal underlayer. The metal plating layer region keeps the metal plating layer not ground and exposed intact to the exterior. The glossy region has the metal plating layer region ground till it assumes gloss, becomes smooth and has the metal underlayer form an exposed glossy surface. The different light reflection regions have the metal plating layer and the metal underlayer ground in a finely linear shape and as well have the metal underlayer and the metal plating layer ground with variations in depth, length and pitch in the direction of the line width. The different light reflection regions are made to vary by having the metal underlayer and the metal plating layer vary in reflection of light.

Since the noble metal jewelry goods of this invention has the metal plating layer region, the glossy region and the different light reflection regions formed as a pattern, it is kept from showing the pattern unduly clearly as experienced heretofore and enabled to manifest gorgeousness. The different light reflection regions, when combined with the metal plating layer region and the glossy region, are enabled to produce varying patterns. Particularly, the different light reflection regions allow numerous patterns, such as clear patterns, blurred patterns and others to be easily combined by varying the length of line, depth and pitch in the direction of the line width.

The noble metal jewelry goods of this invention has the metal underlayer formed of one member selected from the group consisting of metals including gold, platinum, silver, copper and alloys thereof and the metal plating layer formed of at least one member selected from the group consisting of metals including ruthenium, rhodium, palladium, platinum, silver, copper and alloys thereof The noble metal jewelry goods of this invention enables variation, color tone, and/or elegance to be manifested numerously by selecting the materials of the metal underlayer and the metal plating layer and the sequence of stacking of the metal plating layer as well. It suffices that the metal is capable of conducting electricity and, when combined with a noble metal, enabling a produced noble metal jewelry goods to manifest the merit thereof.

Further, the noble metal jewelry goods of this invention has the different light reflection regions formed in a finely linear form The linearly shaped metal plating layer and the linearly shaped metal underlayer appear alternately or separately at prescribed intervals and comprise lines of varying length. Since the lines formed on the surface of the noble metal jewelry goods are varied in depth, length and pitch in the direction of the line width of the metal plating layer, the reflections of light on the periphery of a pattern are so varied that they are enabled to manifest a unique tinge as compared with the pattern produced by using a mask and suffered to show a shape unduly clearly. Particularly when ruthenium is used for the metal plating layer, the noble metal jewelry goods is enabled to acquire a beautiful pattern that results from the intermingling of the golden color of the metal underlayer and the black color of ruthenium constituting the metal plating layer.

The noble metal jewelry goods of this invention enables the metal plating layer region, the glossy region and the different light reflection regions to be formed not only on a plane surface but also on a curved surface. The term "curved surface" embraces concave surfaces, convex surfaces and mixtures thereof

The noble metal jewelry goods of this invention is capable of forming such patterns, such as animal hairs and leopard-print patterns that result from combining the glossy region, the metal plating layer region enclosing the glossy region and the different light reflection regions consisting of fine lines encompassing the periphery of the metal plating layer region.

Furthermore, the noble metal jewelry goods of this invention allows use of ceramic, glass or synthetic resin as the base therefor. On the base that is formed of ceramic, glass or synthetic resin, the metal underlayer and the metal plating layer are formed. The metal underlayer and the metal plating layer, so long as they are individually provided with a thick layer of electroless plating, are enable to form a pattern similar to the pattern on the noble metal jewelry goods performed according to the method of production, through the grinding.

The method of this invention for the production of the noble metal jewelry goods is directed to forming a pattern formed of the noble metal constituting the metal underlayer and the metal plating layer formed on the metal underlayer. At the first step, the metal plating layer is formed, for example, in a uniform thickness on the whole upper surface of the metal underlayer. At the next step, the metal plating layer is ground, then the surface of the metal underlayer is partly ground, and the surface of the metal underlayer is ground till it becomes a glossy surface. At the subsequent step, on the metal plating layer and the metal underlayer, the leading terminal part of a rod-shaped grinding tool having a grinding material, such as diamond, formed at the leading end thereof is made to move alternately in a pattern decided in advance. The alternating motion is controlled to grind the metal underlayer and/or the metal plating layer in a finely linear form varied in length, depth and pitch in the direction of the line width.

According to the method of this invention for the production of the noble metal jewelry goods, since the noble metal jewelry goods is ground in the depth and/or length and the different pitch in the direction of the line width and since the metal plating layer and the metal underlayer are made to emit varied light reflections, the pattern is enabled to form different light reflection regions having no clear peripheries as compared with the pattern obtained by the use of a mask and consequently the noble metal jewelry goods deserves a high price.

Further, the method of this invention for the production of the noble metal jewelry goods contemplates causing the rod-shaped grinding tool to be driven with a driving device capable of producing motions in the x-axis, y-axis and z-axis directions based on the data memorized in advance, thereby producing fine lines varied in length, depth and pitch in the direction of the line width alternately or at prescribed intervals. The controlling device for the driving device, when the processed surface is not a plane surface, is controlled with a processed surface sensor capable of detecting the processed surface. The rod-shaped grinding tool comes in at least two kinds, one kind for glossing and the other kind for random reflection of light.

The method of this invention for the production of the noble metal jewelry goods, during the manufacture of the different light reflection regions, contemplates enabling the rod-shaped grinding tool to vary its pitch of motion in the direction of width. The pitch of motion in the direction of width induces no exposure of the metal plating layer when the pitch is narrow and induces exposure of the metal plating layer when the pitch is wide. In the case of the metal plating layer that is formed of ruthenium, the different light reflection regions are enabled to induce alternate appearance of the golden color of the metal underlayer and the black color of ruthenium by widening the pitch with a prescribed distance. Further, the linear pattern is enabled to manifest varying tinges by varying the depth, length and pitch, respectively.

The method of this invention for the production of the noble metal jewelry goods contemplates using ceramic, glass or synthetic resin for the base. On the base made of ceramic, glass or synthetic resin, the metal underlayer and the metal plating layer are formed by the electroless plating method, the chemical or physical vapor phase growth method or the sputtering method. That is, on the non-metallic material, at least two metallic layers are formed and subjected to the grinding mentioned above. Since the layer of a metal or a noble metal is formed on part or the whole of the surface of the base, the metal jewelry goods can be manufactured in a larger size than the finger ring, with the pattern and light condition assuming nearly the same degree of brightness as the noble metal and the metal plating layer.

### (Example)

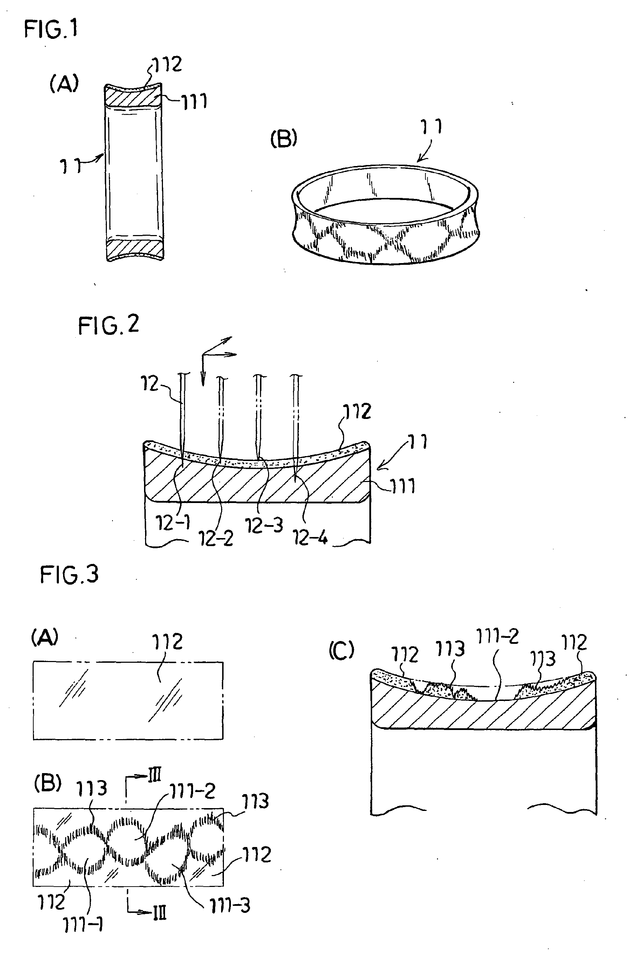

FIG. 1(A) is a cross section depicting one embodiment of this invention for explaining an example of forming a pattern on a finger ring and FIG. 1(B) is a perspective view thereof. Referring to FIG. 1(A), a finger ring 11 has at least one layer of a metal plating layer 112 formed of metal, such as gold, platinum, silver, copper or an alloy thereof in a uniform thickness as by the plating technique on the whole upper surface of a metal underlayer 111 made of metal, such as platinum, silver, copper or an alloy thereof without using any mask. The finger ring 11 shown in FIG. 1 (B) represents one example of the pattern that results from the process of this invention.

FIG. 2 is an enlarged schematic view for explaining the state of manufacture of the pattern of this invention. Referring to FIG. 2, a plated layer, such as the metal plating layer 112 made of ruthenium, is formed in a uniform thickness throughout the upper surface of the metal underlayer 111. A rod-shaped grinding tool 12, as described specifically herein below, is driven with a driving device capable of being driven in the x-axis, y-axis and z-axis directions based on the numerical value assumed by the surface position sensor capable of detecting the surface position of the finger ring 11. The rod-shaped grinding tool 12 is called a "router" or "diamond bar" and has its leading terminal formed thinly and has the surface of the leading terminal covered with fine grinding particles of diamond. The rod-shaped grinding tool 12 for glossing has a rounded leading terminal covered with fine grinding particles of diamond.

The rod-shaped grinding tool 12 is controlled based on the data fixed in advance so as to vary the linear depth, length and pitch in the direction of the line width. A rod-shaped grinding tool 12-1 is shown in the state having formed a grinding performed till its depth reaches the metal underlayer 111. Then, a rod-shaped grinding tool 12-2 is shown in the state having a grinding performed till its depth reaches the neighborhood of the surface of the metal underlayer 111 after having been moved with a stated pitch in the x-axis direction (enlarged; actually the pitch is narrower in most cases, the degree of this pitch can be arbitrarily selected by way of design). Then, a rod-shaped grinding tool 12-3 is moved with a stated pitch in the x-axis direction in the bearings of the figure and then moved to the next position after giving a slight grinding or no grinding to the surface of the metal plating layer 112. A rod-shaped grinding tool 12-4 is shown in the state having formed a grinding to a rather great depth in the metal underlayer 111 after having been moved with a stated pitch in the x-axis direction in the bearings of the figure.

The rod-shaped grinding tool 12 linearly grinds the metal underlayer 111 and/or the metal plating layer 112 with required depth, length and pitch. The linear grinding varied in depth, length and pitch emits various colors, depending on the color of the metal plating layer 112, the color of the metal underlayer 111, the reflection varied by depth and the angle of view.

The rod-shaped grinding tool shown in FIG. 2 is one example and is controlled delicately with the driving device and the controlling device.

FIGs. 3(A) to 3(C) represents an embodiment of this invention, cited with views for explaining an example of the finger ring ground with the rod-shaped grinding tool. Referring to FIG. 3(A), the metal plating layer 112 is formed in a uniform thickness throughout the whole upper surface of the metal underlayer 111. Referring to FIG. 3(B), the rod-shaped grinding tool 12 (for glossing) as shown in FIG. 2 is used to form glossy regions 111-1 and 111-2 exposing the metal underlayer 111. Since the metal plating layer region 112 is not ground at all with the rod-shaped grinding tool 12, it exposes the metal plating layer. The different light reflection regions 113 are regions that have been ground by moving the rod-shaped grinding tool 12 by linear motions varied in depth, length and pitch. FIG. 3(C) is a cross section taken through FIG. 3(B) along line A-A and reveals the presence of regions 113, the glossy region 111-2 and the metal plating layer regions 112. The regions are varied in the linear depth, length and pitch.

For the metal underlayer 111, one member selected from the group consisting of gold, platinum, silver, copper and alloys thereof is used. Then, for the metal plating layer 112, one member selected from the group consisting of ruthenium, rhodium, platinum, palladium, silver, copper and alloys thereof is used. The metal plating layer 112 may form a plurality of layers instead of one layer. The ruthenium and the alloys thereof emit colors having black as a main component. The rhodium, platinum, palladium or silver and alloys thereof emit colors having silver white as a main component. Though these are invariably silver white colors, they are more or less varied in tinges, depending on the materials used and the combination thereof. When these materials form a multilayer, the produced jewelry goods enables a viewer to take ample pleasure in variation of luxury and color tone. The metal underlayer 111 and/or the metal plating layer 112 allow incorporation of a noble metal or a metal besides the metals and the alloys enumerated above.

On the metal plating layer 112, a film of hard glass or a film of synthetic resin may be formed. When the film of hard glass or synthetic resin is made to contain a pale color, the produced beautiful jewelry goods is enabled to abound in variation because of the combination of this pale color and the color of the metal underlayer 111 and the color of the metal plating layer 112. Particularly, since the light reflection regions variably reflect light in varied amounts, depending on the angle of view, the color of the metal underlayer and the color of the hard glass film look copiously varied depending on the angle of view and the degree of reflection of light. A modification of the embodiment cited above allows the metal underlayer 111 and the metal plating layer 112 to use silver, copper or brass in the place of gold and platinum. The silver, copper or brass has its surface undergo oxidation and change color easily. When it is covered with the film of hard glass, however, the oxidation is prevented and the color peculiar to the metal can be incorporated dexterously.

FIG. 4 is an explanatory view showing one example of the method for the production of the noble metal jewelry goods according to this invention. Referring to FIG. 4, a supporting rod 41 supports the finger ring 11 to be processed. The finger ring 11 has at least one layer of the metal plating layer 112 formed on the whole upper surface of the metal underlayer 111 of gold. The rod-shaped grinding tool 42 to be used for grinding is applied at a required position of the finger ring 11. The rod-shaped grinding tool 42 is fixed with a fixing device 43. The fixing device 43 is attached to a driving device 44 capable of moving in the x-axis, y-axis and z-axis directions.

A three-dimensional pattern-memorizing device 45 derives a required shape from a shape input device 46 allowing entry of a two-dimensional or three-dimensional shape. The curved surface of a workpiece being processed requires changing the motion of the rod-shaped grinding tool 42 in the x-axis, y-axis and z-axis directions. A workpiece surface position-detecting device 47, therefore, detects the position of the bar-like polishing tool 42 and forwards relevant information to the three-dimensional pattern-memorizing device 45. The rod-shaped grinding tool 42 is enabled by the three-dimensional device to manufacture a pattern shown in FIG. 3 three-dimensionally. The glossy region and the different reflection regions on the workpiece being processed require the leading terminal shape of the rod-shaped grinding tool 42 or the size of the diamond grains for grinding to be different from each other.

The embodiment of this invention has been described in detail. This invention nevertheless is not limited to this embodiment. This invention allows various changes of design so long as the changes do not depart from the matters set forth in the appended claims. The block of FIG. 4 can be accomplished by the publicly known or universally known electronic data-processing technique. While the embodiment has been described with respect to a curved finger ring, it can be naturally applied to noble metal jewelry goods that have complicated curved surfaces besides plane surfaces. The noble metal jewelry goods described in the embodiment may be replaced with the those using a base of ceramic, glass or synthetic resin. The noble metal jewelry goods of this invention are enabled by the profile control or the manual fashion of a highly skilled craftsman to be manufactured with high repeatability with the aid of a jig capable of fixing a workpiece. Though the noble metal jewelry goods of this invention have been described with respect to a finger ring, this invention can be applied as well to the jewelry goods having plane surfaces and/or curved surfaces.

### Industrial Applicability:

Since the noble metal jewelry goods of this invention has its pattern formed of the metal plating layer region, the glossy region and the different light reflection regions as described above, the pattern does not show unduly clearly as conventionally experienced and can manifest gorgeousness. The different light reflection regions, by varying its linear length, depth and pitch in the direction of the line width, are enabled to facilitate numerous combinations of clear patterns and blurred patterns, for example.

According to the method of this invention for the production of the noble metal jewelry goods, since the noble metal jewelry goods is enabled to form thereon regions varied in light reflection by varying linear depth, length and pitch in the direction of the line width during processing of the pattern to the metal underlayer and/or the metal plating layer on the metal underlayer, the metal plating layer and the metal underlayer emit mutually different light reflections. Thus, the produced pattern forms different light reflection regions showing no clear periphery as compared with the pattern manufactured by using a mask and enables manufacture of a noble metal jewelry goods deserving a high price.

## Claims

1. A noble metal jewelry goods having a pattern formed of a noble metal constituting a metal underlayer and a metal plating layer formed on the metal underlayer, wherein the pattern comprises:
a metal plating layer region that exposes the metal plating layer;
a glossy region that exposes a glossy surface of the metal underlayer in consequence of removal of the metal plating layer by grinding; and
different light reflection regions that generate different light reflections in consequence of variation in depth and length of the metal plating layer and the metal underlayer through fine and linear grinding.

2. A noble metal jewelry goods according to claim 1, wherein the metal underlayer is made of at least one member selected from the group consisting of gold, platinum, silver, copper and alloys thereof and the metal plating is made of at least one member selected from the group consisting of ruthenium, rhodium, palladium, platinum, silver, copper and alloys thereof.

3. A noble metal jewelry goods according to claim 1 or claim 2, wherein the different light reflecting regions have fine lines of the metal plating layer and the metal underlayer appearing alternately or with prescribed intervals.

4. A noble metal jewelry goods according to any of claims 1 to 3, wherein the pattern has a curved surface on which the metal plating layer region, the glossy region and the different light reflection regions are formed.

5. A noble metal jewelry goods according to any of claims 1 to 4, wherein the metal plating region of the pattern encloses the glossy region, and the different light reflection regions consist of fine lines encircling a periphery of the metal plating region.

6. A noble metal jewelry goods according to any of claims 1 to 5, further comprising a base of ceramic, glass or synthetic resin on which the metal underlayer and the metal plating layer are formed.

7. A method for the production of a noble metal jewelry goods having a pattern formed of a noble metal constituting a metal underlayer and a metal plating layer formed on the metal underlayer, comprising the steps of:
forming the metal plating layer on the metal underlayer;
grinding the metal plating layer till a glossy surface of the metal underlayer is exposed; and
grinding in a finely linear form the metal plating layer and the metal underlayer using a rod-shaped grinding tool having a grinding material formed at a leading end thereof and producing a prescribed alternating motion to give the metal underlayer and the metal plating layer different grinding depths;
whereby the pattern comprises a metal plating layer region, a glossy region and different light reflection regions.

8. A method according to claim 6, wherein the different light reflecting regions are formed with finely linear lengths, depths and pitches based on information memorized in advance, using a driving device capable of being driven in x-axis, y-axis and z-axis directions, a controlling device for the driving device, and a detecting sensor capable of detecting a surface to be processed.

9. A method according to claim 5 or claim 6, wherein the rod-shaped grinding tool has pitches of motion thereof varied during the manufacture of the different light reflection regions.

10. A method according to any of claims 5 to 7, wherein the noble metal jewelry goods has a base of ceramic, glass or synthetic resin, on which the metal underlayer and the metal plating layer are formed by the electrolessly plating method, chemical or physical vapor phase growth method or sputtering method.
